# DEMANDE DE BREVET EUROPEEN

(11) **EP 0 773 135 A1**
(43) Date de publication de la demande: **14.05.1997**
(21) Numéro de dépôt: 96402347.7
(22) Date de dépôt: 05.11.1996
(51) Int. Cl.: B60N 2/52, F15B 5/00, F15B 21/06

(54) **Adaptateur d'impédance mécanique**

(30) Priorité: 10.11.1995 FR 9513343
(71) Demandeur: THOMSON-CSF, 75008 Paris (FR)
(72) Inventeur: Luc, François, 94117 Arcueil Cedex (FR); Suppa, Vito, 94117 Arcueil Cedex (FR)
(74) Mandataire: Desperrier, Jean-Louis

(57) **Abrégé**

L'invention conceme un adaptateur d'impédance mécanique qui permet de transformer un mouvement de faible amplitude et de grande force en un mouvement de grande amplitude et de faible force.

Elle consiste, dans un adaptateur comportant deux pistons (103,104) de surface inégales dont les mouvements sont transmis réciproquement de l'un à l'autre par un fluide, à utiliser pour ce fluide un gel acoustique. Les caractéristiques de ce gel l'empêchent de fuir par le jeu existant entre les pistons et les trous (109,110) dans lesquels il coulisse, sans nécessiter de moyens d'étanchéité, tels que des segments, entre ces pistons et les parois de ces trous.

Elle permet de réaliser des amortisseurs de vibration pour siège d'automobile.

## Description

La présente invention se rapporte aux adaptateurs d'impédance mécanique qui permettent de relier un moteur linéaire à une charge en adaptant l'impédance entre ces deux dispositifs de telle manière que le transfert de puissance mécanique soit optimal.

Quand on cherche à mettre en mouvement une structure présentant une certaine charge mécanique à partir d'un moteur permettant de délivrer une puissance déterminée avec certaines caractéristiques de déplacement et de vitesse, il est nécessaire pour obtenir des effets appréciables que ces caractéristiques soient adaptées à celle de la charge à mettre en mouvement. Pour étudier cette adaptation, le plus facile est de modéliser l'obtention d'une vibration à une fréquence déterminée à partir d'une force F appliquée à cette structure pour obtenir une vitesse vibratoire v. Dans ces conditions on est amené à définir une grandeur appelée impédance mécanique de la structure est correspondant au rapport F/v.

Le mécanisme moteur permettant d'obtenir cette force peut généralement être assimilé à un générateur de force possédant lui-même sa propre impédance mécanique interne. On sait qu'en électricité le transfert maximale de force entre un générateur et un récepteur est obtenu lorsque l'impédance du générateur est égale à l'impédance du récepteur; on dit alors qu'il y a adaptation entre le générateur et le récepteur. Cette notion s'étend à de nombreux domaines en dehors de l'électricité, plus particulièrement à la mécanique. On peut ainsi montrer que pour que le transfert de l'énergie mécanique entre un moteur et sa charge soit maximal, il faut que l'impédance mécanique du moteur soit égale à l'impédance mécanique de la charge. De même que l'on a utilisé le terme d'impédance pour la mécanique, on dira que les impédances du moteur et de la charge sont adaptées.

Il arrive très souvent que l'on dispose d'un moteur présentant une certaine impédance et d'une charge présentant une toute autre impédance et qu'il ne soit pas possible de modifier l'un ou l'autre pour que les impédances soient adaptées alors qu'il est nécessaire d'utiliser ce type de moteur pour actionner ce type de charge.

Un tel problème est résolu en électricité par l'utilisation d'un transformateur électrique, qui permet de multiplier par un rapport déterminé la tension appliquée à son entrée pour obtenir une tension adéquate sur sa sortie; le courant dans la charge étant alors divisé par rapport au courant débité dans le transformateur par ce même coefficient.

On sait construire des adaptateurs d'impédance mécanique. L'exemple le plus simple dans le cas d'un mouvement rotatif consiste en un jeu d'engrenages dont le rapport multiplicateur correspond au rapport d'adaptation souhaitée. Dans le cas d'un mouvement linéaire, on peut utiliser un système à bras de levier inégaux, ou alors un arrangement à base de poulies. De tels systèmes, s'il présentent l'avantage d'être purement mécaniques, ne sont efficaces que pour des mouvements très lents correspondant à des fréquences très basses et de grands déplacements (problèmes de jeu).

Pour des fréquences plus hautes, mêmes si elles sont communément appelées basses fréquences en rapport avec le spectre sonore , on sait utiliser des systèmes de type hydromécanique dans lesquels le mouvement est transmis par un fluide enfermé dans une chambre comportant deux pistons de surfaces inégales.

L'un des pistons est relié au moteur, ou actionneur linéaire, et l'autre piston à la charge à mouvoir. La pression restant constante à l'intérieur du fluide, les forces exercées sur les pistons seront dans le rapport des surfaces, et les mouvements correspondant à ces forces dans l'inverse de ce rapport . En prenant un rapport de surfaces adéquat on pourra alors adapter un moteur relativement quelconque à une charge relativement quelconque.

Si dans ce principe le système est simple, sa réalisation pratique est beaucoup plus compliquée. En effet, avec les fluides généralement utilisés, dont la viscosité est la plus faible possible pour obtenir le meilleur rendement possible , il est nécessaire d'utiliser des segments autour des pistons, afin de limiter le plus possible les fuites. Ceci complique beaucoup la fabrication du dispositif en lui enlevant sa simplicité de principe. En outre ces segments constituent les sources importantes de non linéarité, en raison des irrégularités dans leurs frottements, ce qui dégrade la qualité de l'adaptation entre le moteur et la source et entraîne des pertes de rendement, ainsi que dans certains cas un dégagement de chaleur excessif qu'il faut évacuer par ailleurs à l'aide d'un dispositif qui complique encore la fabrication de l'adaptateur. Dans certains cas, les segments sont remplacés par des joints toriques, ce qui améliore éventuellement les problèmes de glissements, mais rajoute une force de rappel due à la torsion du joint, qui perturbe d'une autre manière le mouvement de l'ensemble et vient elle aussi dégrader la caractéristique d'adaptation.

Il est néanmoins possible de fabriquer des pistons sans segments qui présentent un minimum de fuite, mais la précision d'usinage à respecter est terriblement étroite et entraîne des surcoûts très importants . Par ailleurs le frottement obtenu n'est pas sensiblement inférieur à celui obtenu avec des segments. Enfin les conditions d'ambiance à respecter sont très stricts, en température comme en propreté, pour éviter des coincements qui sont malheureusement relativement fréquents en dépit des précautions prises.

Enfin l'assemblage final des pièces d'un tel dispositif et le remplissage avec le fluide utilisé nécessitent à un moment ou à un autre d'effectuer une purge de l'air pour éviter la présence de poches d'air ou de bulles, qui perturberaient encore plus gravement l'adaptation en raison de leur compressibilité. Un tel système de purge réagit bien entendu de manière défavorable sur la complexité et le coût du dispositif.

Pour pallier ces inconvénients l'invention propose un adaptateur d'impédance mécanique, du type comportant un corps muni d'une chambre dans laquelle débouche au moins deux trous de sections droites différentes, un premier piston coulissant dans l'un des trous, un deuxième piston coulissant dans l'autre trou, et un fluide remplissant la chambre pour transmettre le mouvement d'un piston à l'autre, principalement caractérisé en ce que les pistons coulissent librement dans les trous sans être munis de moyens d'étanchéité particuliers, et en ce que le fluide est un gel dont le module de cisaillement est suffisamment fort pour éviter les fuites entre les trous et les pistons et suffisamment faible pour transmettre sans contraintes le mouvement entre les pistons.

D'autre particularités et avantages de l'invention apparaîtront clairement dans la description suivante, faite à titre d'exemple non limitatif en regard des figures annexées qui représentent :
- la figure 1 , une vue de côté d'un dispositif de contrôle d'un siège d'automobile utilisant un adaptateur selon l'invention;
- la figure 2 , une coupe d'un adaptateur selon l'invention;
- la figure 3, une diagramme module/fréquence d'un gel utilisé dans un tel adapteur; et
- la figure 4, une vue de côté d'un projecteur sonore utilisant un adaptateur selon l'invention.

Bien que la portée de l'invention soit très générale, les adaptateurs selon l'invention sont plus particulièrement utiles pour adapter un moteur linéaire délivrant une grande force avec une faible amplitude, à une charge devant être actionnée longitudinalement avec une grande amplitude et en présentant une faible impédance.

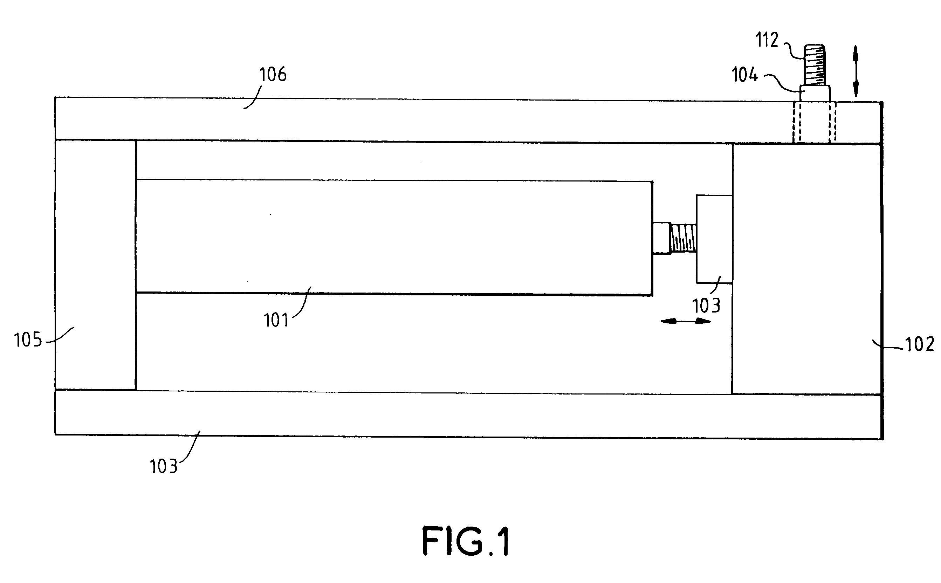

C'est par exemple le cas pour contrôler de manière active les vibrations des sièges de véhicules, en particulier d'automobiles, de manière à diminuer la fatigue pour permettre au conducteur de consacrer plus d'attention à la conduite de son engin. On est amené à cet effet à utiliser quatre dispositifs tels que représentés sur la figure 1, de manière à pouvoir contrôler totalement l'assiette du siège. Quatre de ces dispositifs, qui sont relativement allongés, sont disposés côte à côte sous le siège de manière à ce que deux points de fixation du siège soient situés vers l'avant de celui-ci et les deux autres vers son arrière.

Les moyens moteur utilisés dans ce dispositif sont formés d'un actionneur magnétostrictif 101 qui forme une barre relativement allongée. Un tel actionneur utilisant un matériau tel que le Terfenol D possède un excellent rapport puissance mécanique/compacité. Toutefois si la force fournie par cet actionneur peut être relativement importante, de l'ordre de 2000 N. crête à crête pour une section de 1cm² de matériau actif. Le déplacement longitudinal maximal est relativement faible et correspond, pour des dimensions de l'ordre de quelques dizaines de centimètres utilisées ici, à des déplacements de l'ordre de 100 micromètres crête à crête. Un tel déplacement n'est pas compatible avec l'amplitude des vibrations du siège à compenser, qui sont, dans la bande de fréquence où l'on souhaite effectuer cette compensation, de l'ordre de 1 mm crête à crête.

Dans ces conditions, on utilise un adaptateur d'impédance mécanique selon l'invention qui comprend un corps 102 dans lequel pénètre un piston 103 de large section, raccordé à l'extrémité active de l'actionneur 101, et un deuxième piston 104 de section plus petite qui fait saillie à 90° par rapport au premier piston sur le corps de l'adaptateur, et sur lequel on vient fixer l'un des points d'ancrage du siège à stabiliser.

L'actionneur et l'adaptateur sont eux-mêmes fixés à l'intérieur d'un bâti en U comportant une plaque d'appui arrière qui forme la branche transversale du U, sur laquelle est fixée l'extrémité non active de l'actionneur, et deux plaques longitudinales 106 et 107 qui forment les branches verticales du U, à l'intérieur duquel sont situés l'actionneur et l'adaptateur. Le corps 102 de l'adaptateur d'impédance est fixé aux deux extrémités de ces plaques opposées à la plaque d'appui 105.

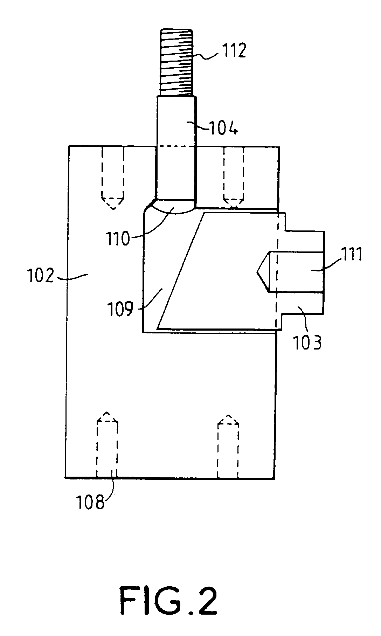

On a représenté sur la figure 2 une vue en coupe verticale de cet adaptateur. Le corps 102 est formé d'un bloc parallélépipèdique comportant des perçages taraudés 108 permettant de le fixer sur les plaques 106 et 107.

On a en outre percé dans ce corps deux trous d'axes perpendiculaires 109 et 110 de diamètres adaptés à ceux des pistons 103 et 104. Ces trous forment une chambre qui sera remplie du fluide destiné à transmettre les efforts depuis le piston 103 jusqu'au piston 104. La différence de diamètre entre ces pistons réalise l'adaptation mécanique souhaitée.

Le gros piston 103 comporte à son extrémité faisant saillie hors de l'adaptateur un taraudage 111 qui permet de fixer ce piston sur l'extrémité active de l'actionneur 101. L'autre extrémité de ce piston est usinée en biais de manière à ce qu'il remplisse au maximum la chambre, sans gêner le mouvement du piston 104, afin de limiter le volume offert au fluide pour limiter les effets de compressibilité de ce fluide et donc limiter les inconvénients apporté par cette compressibilité.

Le petit piston 104 qui pénètre dans le trou 110 présente sur son extrémité extérieur un filetage 112 qui permet de le fixer sur le point d'encrage du siège. Sa longueur est adaptée pour limiter là aussi le volume de la chambre contenant le fluide, compte tenu de l'amplitude maximale des mouvements apportée par le système.

Selon l'invention, le fluide remplissant la chambre formée par les trous 109 et 110 est constitué d'un gel dit "acoustique" usuellement utilisé pour les systèmes acoustiques, en particulier pour les sonars. En effet les modules de compression de ces gels sont tout à fait comparables au module de compression de l'eau, alors que leur module de cisaillement, paramètre qui est nul pour un fluide comme l'eau, présente une valeur finie qui peut être continuellement ajustée en fonction de la formulation du gel sur plusieurs ordres de grandeur. Selon l'invention, on choisit un gel dont le module de cisaillement est suffisamment faible pour permettre le mouvement des pistons et pour assurer la transmission de la pression depuis le gros piston 103 jusqu'au petit piston 104, mais qui est suffisamment grand pour éviter des fuites entre les pistons et le corps de l'adaptateur sans utiliser de segments, de joints toriques, ni d'ajustages serrés. De cette manière on pourra usiner le corps 102 et les pistons 103 et 104 avec des tolérances d'ajustements de valeur H6/g7, qui correspondent de manière connue à un coulissement très libre ne provoquant pas d'efforts de friction sensibles et ne présentant pas de risque de coincement par basculement des pistons.

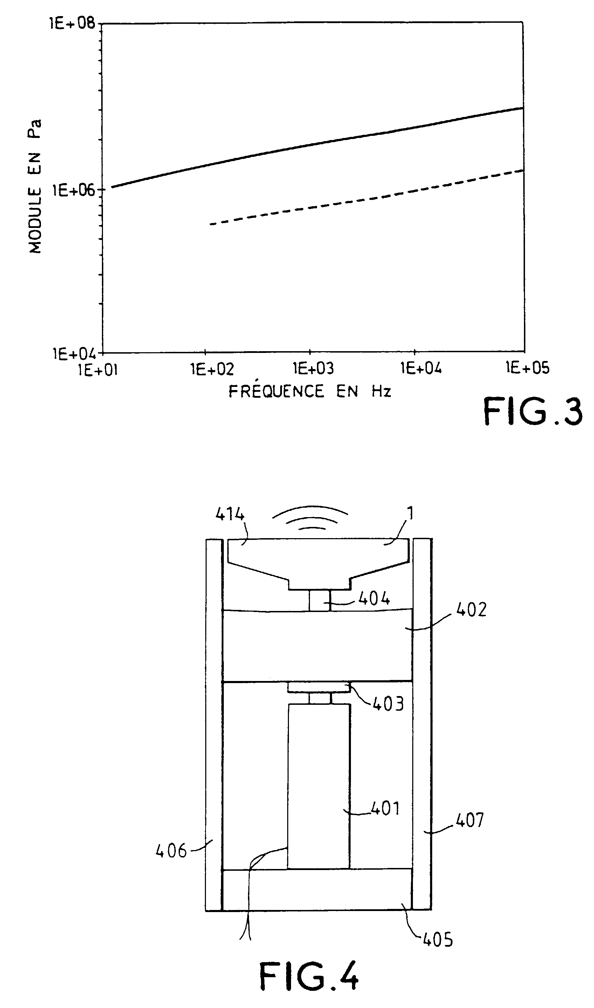

Parmi les différents gels pouvant être utilisés, on citera plus particulièrement les mélanges de copolymères thermoplastiques séquencés avec un solvant tel que de l'huile paraffinique. On a représenté sur la figure 3, pour deux gels particuliers particulièrement adaptés à l'usage dans de tels adaptateurs d'impédance mécanique, le module de cisaillement dynamique de ces gels en fonction de la fréquence. Cette courbe montre clairement que ces gels transmettent bien les vibrations mais qu'ils ne risquent pas de couler par le jeu subsistant entre les pistons et le corps.

L'absence de moyens d'étanchéité entre les pistons et le corps permet en outre de simplifier considérablement le montage de l'adaptateur. En effet, il suffit d'enfoncer le gros piston 103 dans le corps, sans utiliser d'appareillage particulier tel qu'un compresseur de segments, puis de verser par le trou 110 la quantité suffisante de gel dans la chambre formée par ce trou et le trou 109. On enfonce ensuite doucement le piston 104 dans le trou 110 jusqu'à ce qu'il vienne au contact du gel. L'absence de dispositif d'étanchéité sur ce piston 104 permet alors à l'air de sortir librement par le jeu subsistant entre le piston et le corps, ce qui réalise une purge naturelle du système sans moyens particuliers pour assurer cette purge, d'où une grande simplification de l'ensemble.

Pour remplir la chambre avec le gel, on chauffera celui-ci jusqu'à ce qu'il soit en phase liquide, ce qui facilitera le remplissage et le dégazage de ce gel. Le piston de petit diamètre 104 est alors mis en place après le refroidissement de façon à éviter les fuites du gel liquéfié. Comme le changement de phase gel/liquide des gels acoustiques est totalement réversible et peut être répété autant de fois que nécessaire, on peut très facilement en cas de besoin réchauffer l'ensemble pour démonter les pistons, et par exemple recomplèter le volume de gel si celui-ci à diminué à la suite d'un usage intensif de l'adaptateur.

La gamme des sections utilisables pour les deux pistons est très grande. La seule limitation éventuelle provient de ce que la compressibilité de la chambre contenant le gel augmente avec le rapport des sections, ce qui peut finir par devenir prohibitif lorsque l'impédance de la charge devient supérieure à la raideur du gel dans la chambre.

La description ci-dessus n'est pas du tout limitative, et on peut très bien par exemple utiliser un système sans renvoi d'angle dans lequel les pistons sont coaxiaux, ou un système dans lequel on peut additionner le mouvement de plusieurs actionneurs. Un tel système comprendrait par exemple quatre trous forés sur les quatre faces latérales du corps 102 et quatre pistons semblables aux pistons 103 venant pénétrer dans ces quatre trous. Le mouvement du petit piston 104 serait alors fonction du mouvement des quatre gros pistons 103, et on pourrait utiliser quatre actionneurs de caractéristiques différentes en utilisant des diamètres de pistons 103 adaptés aux caractéristiques de ces actionneurs et à la variation d'impédance souhaitée. Pour minimiser les volumes de chambre contenant le gel il serait alors souhaitable d'usiner les extrémités de ces pistons en forme de coin de manière à ce qu'ils puissent pénétrer au maximum dans la chambre sans venir se gêner les uns les autres.

Parmi les différentes applications d'un tel adaptateur d'impédance, on citera en particulier la réalisation d'un projecteur acoustique, plus particulièrement utile dans le domaine de l'acoustique sous-marine.

On sait en effet que dans le domaine des transducteurs acoustiques basse fréquence, il est nécessaire d'obtenir des mouvements vibratoires de relativement forte amplitude pour lesquels les transducteurs électroacoustiques généralement utilisés, tel que les actionneurs magnétostrictifs décrits plus haut, sont relativement mal adaptés, alors qu'ils présentent ailleurs beaucoup de caractéristiques intéressantes pour cet usage.

L'invention propose donc d'utiliser un adaptateur d'impédance mécanique du type décrit plus haut pour réaliser un projecteur acoustique tel que représenté sur la figure 4.

Ce projecteur comprend, comme sur la figure 1, un transducteur magnétostrictif 401 fixé sur une plaque d'appui arrière circulaire 405 formant la partie arrière d'un bâti cylindrique dont les organes 406 et 407 représentent la section longitudinale.

L'extrémité active de cet actionneur est fixée sur le piston d'entrée d'un adaptateur acoustique 402 selon l'invention. Cet adaptateur mécanique acoustique, qui est fixé sur la surface intérieure du cylindre 406/407, est très semblable à celui de la figure 1, sauf qu'il fonctionne de manière coaxiale et non pas en renvoi d'angle.

Le piston de sortie 404 de cet adaptateur acoustique vient actionner un pavillon d'émission 414 dont la face avant rayonne les ondes acoustiques souhaitées dans le milieu dans lequel ce projecteur est plongé.

Le pavillon acoustique coulisse à l'intérieur du cylindre 406/407 qui permet de le maintenir sans exercer d'effort trop important sur le piston 404. Une plaque souple en polyuréthane, non représentée, permet de maintenir l'étanchéité du cylindre.

Une autre application intéressante de l'invention se situe dans le domaine des machines outils et de la robotique en général, où on pourrait utiliser un tel adaptateur mécanique d'impédance pour réaliser les divers actionneurs nécessaires, et en particulier les étaux hydrauliques permettant de fixer facilement des pièces à usiner dans des machines de type automatisé.

## Revendications

1. Adaptateur d'impédance mécanique, du type comportant un corps (102) muni d'une chambre dans laquelle débouche au moins deux trous de sections droites différentes (109,110), un premier piston (103) coulissant dans l'un des trous, un deuxième piston (104) coulissant dans l'autre trou, et un fluide remplissant la chambre pour transmettre le mouvement d'un piston à l'autre, caractérisé en ce que les pistons coulissent librement dans les trous sans être munis de moyens d'étanchéité particuliers, et en ce que le fluide est un gel dont le module de cisaillement est suffisamment fort pour éviter les fuites entre les trous et les pistons et suffisamment faible pour transmettre sans contraintes le mouvement entre les pistons.

2. Adaptateur selon la revendication 1, caractérisé en ce que le gel est un gel acoustique .

3. Adaptateur selon l'une quelconque des revendications 1 et 2, caractérisé en ce que le gel présente un module de compression de l'ordre de grandeur du module de compression de l'eau.

4. Adaptateur selon l'une quelconque des revendications 1 à 3, caractérisé en ce que le gel est formé d'un mélange de copolymères thermoplastiques séquencés avec une huile paraffinée.

5. Dispositif d'élimination des vibrations pour siège de véhicule automobile, du type comprenant un actionneur magnétostrictif à faible débattement (101), caractérisé en ce qu'il comprend un adaptateur d'impédance mécanique (102) selon l'une quelconque des revendications 1 à 4 permettant d'augmenter l'amplitude des mouvements de l'actionneur pour les rendre compatibles avec l'amplitude des vibrations à éliminer.

6. Dispositif selon la revendication 5, caractérisé en ce que l'actionneur (101 ) est allongé pour être fixé longitudinalement sous le siège du véhicule, et en ce que l'adaptateur (102) permet d'obtenir un renvoi de 90° du mouvement mécanique.
